# EUROPEAN PATENT SPECIFICATION

(11) **EP 2 687 078 B1**
(45) Date of publication and mention of the grant of the patent: **30.08.2017**
(21) Application number: 12177261.0
(22) Date of filing: 20.07.2012
(51) Int. Cl.: A01D 34/90, B25F 5/02

(54) **Work machine and control handle to be attached thereto**
Arbeitsmaschine und daran zu befestigender Steuerungshandgriff
Machine de travail et manche de commande destiné à être fixé à celle-ci

(43) Date of publication of application: 22.01.2014
(73) Proprietor: Yamabiko Corporation, Ohme-shi Tokyo (JP)
(72) Inventor: Kamo, Keita, Tokyo, Tokyo (JP)
(74) Representative: Schaumburg und Partner Patentanwälte mbB

(56) References cited:
- JP-A- 2002 034 315
- US-A- 4 006 528
- US-A- 6 082 087
- US-A1- 2007 067 947
- US-A1- 2009 277 021

## Description

### FIELD OF THE INVENTION

The present invention relates to a work machine and a control handle to be mounted thereon, and typically relates to a brush cutter.

### BACKGROUND OF THE INVENTION

Brush cutters are widely used for removing weeds, mowing undergrowth in forests and fields, and trimming shrubs. Brush cutters are composed of a power source, a rotating shaft driven by the power source, an operating pipe enclosing the rotating shaft and a rotary blade connected to a distal end of the rotating shaft. Depending on types of power sources, they are roughly divided into those using internal combustion engines (for example, Japanese Patent Laid-open Publication No. hei 10-150825) and those using electric motors (for example, Japanese Patent Laid-open Publication No. 2012-55195 and USD 342,425)

Blades for brush cutters widely range, depending on their intended use, and include nylon cutters with plural nylon-strings attached to spinning disks, metal blades having plural metal edges (for example, USD 493,476), chip saws with alloy chips embedded at distal ends of edges, circular saws (for example, USD 519,336), and so on.

Brush cutters each have a control handle fixed to the operating pipe. Worker execute trimming with these brush cutters by manipulating the control handle and moving the operating pipe right and left in most cases. In this connection, there are various proposals related to such control handles.

Japanese Patent Laid-open Publication No. hei 10-150825 and Japanese Patent Laid-open Publication No. 2012-55195 disclose left and right grip portions extending uprightly relative to control handles of brush cutters.

Japanese Patent Laid-open Publication No. 2002-34315 proposes an control handle of a brush cutter in which a right grip portion to be grasped by the right hand extends uprightly and a left grip portion to be grasped by the left hand extends horizontally. Japanese Patent Laid-open Publication No. 2007-259721 proposes a control handle of a brush cutter that has a mechanism capable of changing right and left upright grip portions that slightly slant outward to become distant from each other toward their tops. This handle can be switched between a double-handed configuration requiring a worker to grasp the right and left grip portions with his right and left hands when manipulating the control handle and a single-handed configuration permitting a worker to grasp any one of the upright grip portions with any of his hands when manipulating the control handle.

Like Japanese Patent Laid-open Publication No. 2007-259721, Japanese Patent Laid-open Publication No. 2007-89582 proposes a control handle of a backpack blower, vacuum or mist blower. This Japanese Patent Laid-open Publication No. 2007-89582 discloses a control handle that can be switched between a double-handed configuration and a single-handed configuration permitting a worker to grasp any one of the upright grip portions with any of his hands when manipulating the control handle. In addition, this existing proposal discloses that upright grip portions become closer to each other toward their tops. That is, this Japanese Patent Laid-open Publication No. 2007-89582 discloses grip portions in which, taking the right grip portion for explanation, it has a posture slightly slants to the left (inward) relative to a vertical line. This Japanese Patent Laid-open Publication No. 2007-89582 explicitly teaches that this angle of this inclination is approximately 20 degrees (approximately 70 degrees relative to a horizontal line).

As explained with some existing examples, work machines having control handles have experienced various improvements to slightly incline their grip portions outward or inward, keeping their generally upright configurations. For easier understanding of the explanation hereafter, the term "upright grip portion" is used in this specification to generically call these types of grip portions having configurations standing upright or substantially upright even though slightly slanting outward or inward.

US 2007/0067947 A1 discloses a work machine according to the preamble of claim 1. This work machine comprises a first handle, on which control elements are disposed, and a second handle. The first handle is adjustable between a first operating position for a two-handed operation in which the work machine is adapted to be guided by both the first handle and the second handle, and a second operating position for a one-handed operation in which the work machine is adapted to be guided by the first handle.

### SUMMARY OF THE INVENTION

### Problems To Be Solved By The Invention

Work machines having control handles are often required to work not only with right and left movements of the handles but also with their up and down movements. Taking a brush cutter for explanation in this respect, when it is desirable to cut tall grass in two steps for upper and lower parts, a worker will first draws his hands toward the sides of his body to thereby lift the blade from the ground. Keeping this posture, he moves the operating pipe right and left to execute the first cutting operation. Thereafter, he lowers the blade near the ground level, and while keeping it in that level, he moves the operating pipe right and left to execute the second cutting operation. For trimming or mowing operation on a sloping ground, the worker, standing on the slope, will have to draw his hands toward his body to lift the blade. Keeping this posture, he moves the operating pipe right and left. Even in case of trimming or mowing operation on a flat ground, the worker will have to lift the blade when he must avoid obstacles.

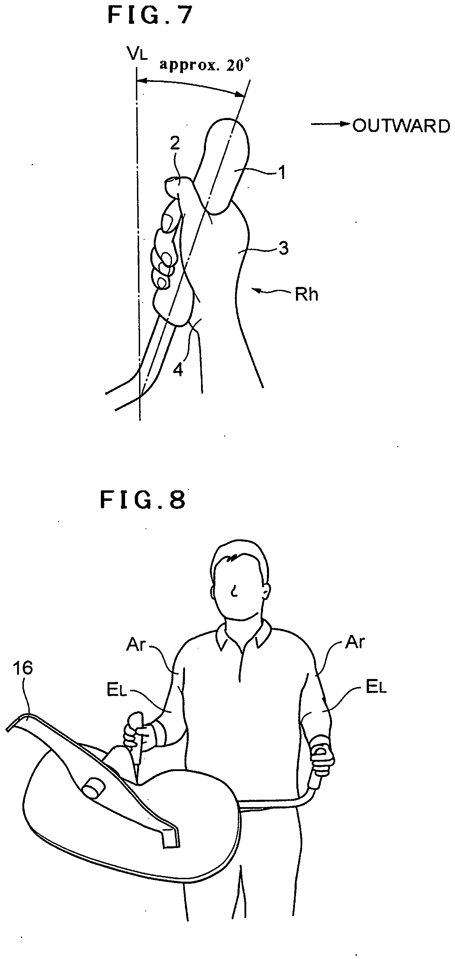

Taking, as an example, a typical control handle having upright grip portions (grip portions being inclined outward relative to a upright line VL by approximately 20 degrees), problems involved in the existing work machines with control handles are explained below with reference to FIGS. 7 to 10. FIG. 7 illustrates a right-side upright grip portion 1 grasped by a worker's right hand Rh. As shown in FIG. 7, the worker's right hand Rh grasping the right-side upright grip portion 1 is oriented to locate its thumb 2 in an upper position and to face the back side 3 of the hand in the lateral outward direction.

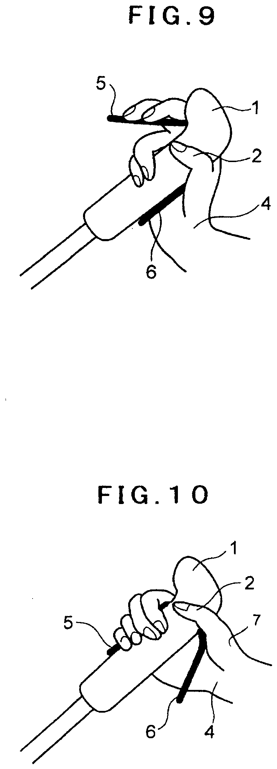

This posture of the worker's hand is convenient to move the control handle right and left. However, when the palm side and back side 3 of the right hand Rh face laterally, it is inconvenient for the worker to move the right hand Rh up and down because of a small motion range of the joint of the wrist 4, and repeating this motion will invites more fatigue. FIGS. 9 and 10 illustrate a posture of the right hand Rh taken when the worker has drawn his both hands on the upright grip portions 1 toward his body and moves the rotary blade upward. In these drawings, reference numeral 5 denotes a trigger lever for controlling the engine output, and reference numeral 6 indicates a throttle unlocking lever.

When the worker moves the rotary blade upward by grasping the upright grip portions 1, the worker's attention may be concentrated too much to grasping the throttle unlocking lever 6 while he is raising the control handle upward with a considerable effort because the motion range of the wrist 4 in this direction is small. In this case, as shown in FIG. 9, it becomes difficult for the worker to grasp the trigger lever 5. In contrast, if the worker's most concentration is taken to grasping the trigger lever 5 while he is lifting the distal end (rotary blade) of the control handle, the proximal end 7 of the thumb 2 will undesirably disengage from the throttle unlocking lever 6 (FIG. 10). With these problems, workers are driven to keep his upper body bent back while he moves the distal end (rotary blade) of the control handle,

For these reasons, existing work machines condemn their users to take uneasy postures such as bending their upper bodies backward especially for lifting the distal end (rotary blade) of the operating pipe, or imposing local loads to the finger (especially the proximal end 7 of the thumb 2) especially of the hand grasping the upright grip portion 1 on which the trigger lever 5 and the throttle unlocking lever 6 are provided.

For example, in case of a brush cutter equipped with a relatively large engine, the worker will perform his cutting or mowing operation with the brush cutter that is supported on a shoulder harness (for example, WO 2008/076010 A1) the worker wears on his shoulder. However, with back and forth movements of his upper body during the operation with the machine, he is liable to lose the physical balance. Therefore, the worker must pay attention to holding on not to fall down during the cutting or mowing operation.

It is therefore an object of the invention to provide a work machine and a control handle to be mounted on the work machine, which can alleviate the load imposed to workers.

A further object of the invention is to provide a work machine and a control handle to be mounted on the work machine, which enable a user of the work machine to proceed with his operation without the need for bending his upper body backward.

### MEANS FOR SOLVING THE PROBLEMS

The Inventor of the present application carefully observed workers in operation with work machines supported on harnesses the workers worn, and paid special attention to movements of their hands and postures of their arms they exhibited when drawing their hands put on grip portions toward their bodies to raise the distal ends of work machines. The present invention has been made from knowledge obtained therefrom.

As already explained above with reference to FIGS. 9 and 10, when the worker grasps the upright grip portion 1 and pulls his hand toward his own body to raise the rotary blade, the worker cannot help but bend his upper part of his body backward because the motion range of the joint of the right hand is small. FIG. 8 shows positions of elbows of the worker when he pulls his hands toward the sides of his body to raise the rotary blade. From this illustration, it will be readily understand that the elbows are positioned very close to both sides of his body. That is, it is apparent from FIG. 8 that the worker behaves to tighten the arms to the sides of his body when he pulls his elbows to lift the rotary blade.

The aforementioned object of the present invention is solved by providing a work machine according to claim 1.

Since the work machine has the grip portions one of which can be grasped by a worker's hand whose back side is faced upward, the worker can manipulate the control handle with a larger motion range of the joint of his wrist because the motion range of a wrist is larger in movement perpendicular to the surface of the palm of the corresponding hand than in movement parallel to the surface of the palm. Further, when the worker grasps the grip portion having the output control member and pulls the control handle toward his body, the worker's elbow draws back and away from the side of his body. When the worker moves the control handle up and down, his arm of the hand grasping the grip portion having the output control member exhibits a motion similar to that for rowing a boat afloat on water.

When the worker pulls the control handle, the elbow corresponding to his subject hand moves away from one corresponding side of his body. In this posture, the elbow EL of the worker, if being average-sized, will be positioned apart from the corresponding side of his body by 200 mm or more. This value, however, varies with the worker's physical size.

Inclination angle of the grip portion having the output control member thereon is preferably in the range larger than 25 degrees and not exceeding 70 degrees relative to a verttical line to allow easier movement of the worker's elbow away from the corresponding side of his body when he pulls the control handle with his hand grasping the grip portion having the output control member. This value of the inclination angle, however, may vary with the physical size of the worker.

If the distance between the right and left grip portions is relatively small, an inclination angle of the grip portion having the output control member in the range from 20 degrees to 40 degrees relative to a vertical line will ensure a drawback movement of the worker's elbow away from the corresponding side of his body when the worker pulls the control handle.

### BRIEF DESCRIPTION OF THE DRAWINGS

FIG. 1 is a perspective backside view of a brush cutter according to an embodiment of the invention.
FIG. 2 is a diagram of a control handle alone, which is mounted on the brush cutter according to the embodiment of the invention, the diagram being taken from the side of a worker in operation with the brush cutter (equal to the side of a power source).

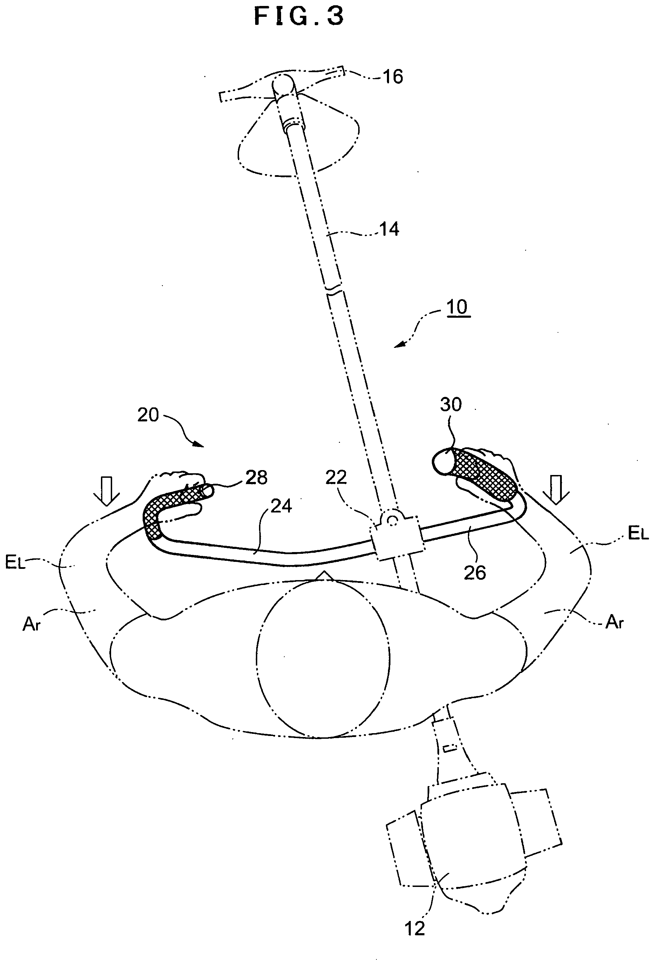

FIG. 3 is a diagram of the brush cutter according to the embodiment of the present invention, taken from its top.
FIG. 4 is a diagram of a right grip portion of the control handle mounted on the brush cutter according to the embodiment of the present invention, viewed from a diagonally rear position.
FIG. 5 is a diagram for explaining that, when a worker has pulled his hands grasping the grip portions to raise a rotary blade upward, his elbows then bent are positioned apart from both sides of his body as if they would be so when he oars a boat on water.
FIG. 6 is a diagram for explaining opening angles of the right grip portion, in which (I) shows the angle being zero, (II) shows the angle being 20 degrees, and (III) shows the angle being 60 degrees.
FIG. 7 is a view of a right upright grip portion of an existing typical control handle and a worker's right hand grasping the grip portion, taken from the worker's side.
FIG. 8 is a diagram for explaining how worker's hands are postured when he raises a rotary blade of an existing brush cutter having right and left upright grip portions in a similar way as FIG. 5.
FIG. 9 is a diagram for explaining problems involved in the existing brush cutter, which shows how the worker's right hand is postured when he has pulled his hands grasping grip portions to raise the rotary blade.
FIG. 10 is a diagram for explaining problems involved in the existing brush cutter, which shows how the worker's right hand is postured when he has raised the rotary blade.

### MODES FOR CARRYING OUT THE INVENTION

### EMBODIMENTS

Preferred embodiments are explained below with reference to the drawings.

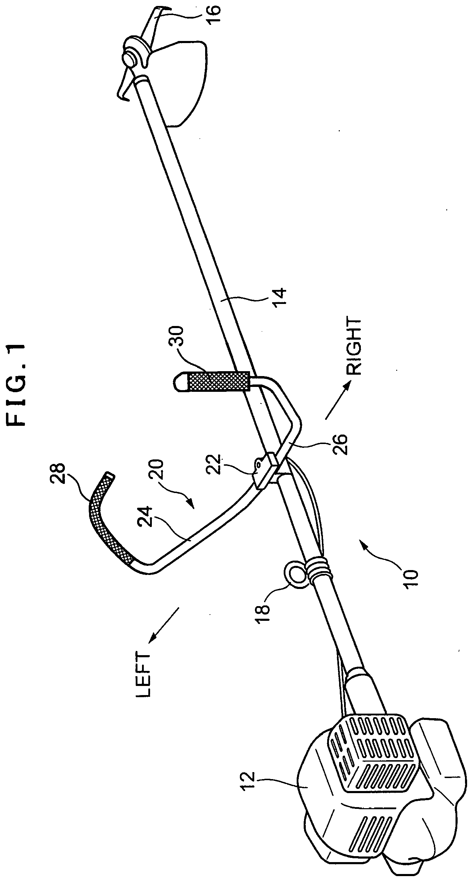

FIG. 1 shows a brush cutter taken as an embodiment of the present invention. The brush cutter 10, like an existing one, has a power source 12, a rotary shaft to be driven rotationally by the power source 12 and a metal operating pipe 14 that covers the rotary shaft. The rotary shaft does not appear in the drawings for convenience of illustration. The brush cutter 10 further includes a rotary blade 16 as its cutter portion attached to a distal end of the operating pipe 14. The rotary blade 16 is connected to the power source 12 through the rotary shaft.

The power source 12 used in this embodiment is a two-stroke internal combustion engine. Instead, a four-stroke internal combustion engine or an electric motor may be used.

An appropriate one of various known blades is selected as the rotary blade 16, depending on the environment where the brush cutter 10 should mainly be used. The embodiment shown here includes a shredder blade suitable for felling shrubby bushes.

The brush cutter 10 of this embodiment bears a relatively large-scale engine. Therefore, a worker wears a shoulder harness on his upper body, and performs the intended cutting or trimming with the brush cutter 10 seized or hooked on the shoulder harness. A more simplified harness may be used instead of such a shoulder harness. A ring 18 is provided at a lengthwise intermediate position on the operating pipe 14 to hook the brush cutter 10 on the harness. This ring 18 engages a hook on the shoulder harness (hip pad).

A control handle 20 is removably attached to a lengthwise intermediate portion of the operating pipe 14 of the brush cutter 10 with a bracket 22 that is a part of the control handle 20. The control handle 20 includes left and right independent metal handle pipes 24 and 26 that are fixed to the bracket 22. Preferably, like in existing machines, proximal ends of the left and right handle pipes 24, 26 are rotatable relative to the bracket 22 about their own axes to be variable in their angles. It is also acceptable to use an integral structure including left and right pipes 24, 26 altogether.

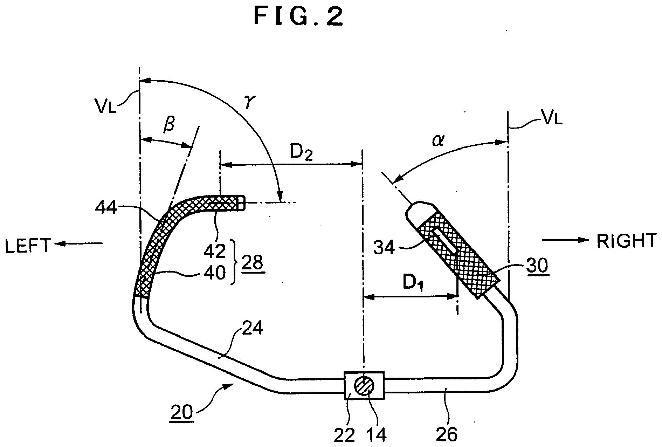

With reference to FIG. 2, the left and right handle pipes 24, 26 have grip portions 28 and 30 that are formed to extend upward by bending opposite free ends of the metal tubes (or tube) of the handle pipes 24, 26. Like in existing machines, the right grip portion 30 is provided, preferably on its front side (facing to the rotary blade 16), with a trigger lever (not shown for simplifying the illustration) which is an output control member for controlling the output of the engine 12. In addition, the right grip portion 30 has, preferably on its back face (facing to a worker in operation), a throttle unlocking lever 34. Positions of the trigger lever and the throttle unlocking lever 34, however, may be determined otherwise. The throttle unlocking lever 34 may be replaced with a throttle unlocking mechanism of a pushbutton type.

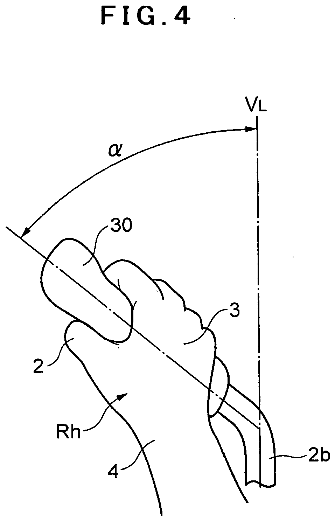

The left and right grip portions 28 and 30 of the control handle 20 largely incline inward. First regarding the right grip 30 having the trigger lever thereon, it inclines inward by inclination angle α being approximately 30 degrees relative to a vertical line VL such that the worker's right hand Rh grasping the right grip portion is postured with its back 3 faced upward (FIG. 4). In this posture with the back 3 of the hand faced upward, the joint of its wrist 4 can move over a larger motion range in the vertical direction. Therefore, the worker can move the operating pipe 14 vertically about the ring 18 (FIG. 1) in engagement with the hook of the shoulder harness as a pivotal axis by easily moving the back 3 of the right hand Rh vertically.

The left grip portion 28 is different from the right grip portion 30 in having no throttle trigger (output control member). Therefore, the left grip portion 28 may be an upright grip portion as those used in conventional machines. The left grip portion 28 used in this embodiment includes, as shown in FIG. 2, two grip sections, i.e. first and second grip sections 40, 42, and a curved transitional portion 44 between the first and second grip sections 40, 42. The first grip section 40 inclines inward by inclination angle β being approximately 15 degrees relative to the vertical line VL. When the worker grasps this first grip section 40 with his left hand, the back of the hand faces laterally like in existing machines. The second grip section 42 that is the distal end of the left grip portion 28 inclines by Y being 85 degrees relative to the vertical line VL. Thus, orientation of the second grip section 42 is approximately horizontal.

With reference to FIG. 2, distance D1 between the right grip portion 30 and the operating pipe 14 is approximately 200 mm. Distance D2 between the left grip portion 28 and the operating pipe 14 is approximately 300 mm when viewed from above. The value of 200 mm as distances D1, D2 is relatively small, and this contributes to guiding backward movements of the right and left elbows EL of the worker away from the side of his body when pulling the control handle 20 toward the body.

The inward inclination angle α of the right grip 30 having the trigger lever thereon may be 25 to 70 degrees when the distance D1 between the right grip portion 30 and the operating pipe 14 is relatively large. However, inward inclination angle α of the right grip 30 is preferably 25 to 50 degrees and more preferably 25 to 45 degrees. As far as the angle α is in these ranges, an ordinary worker in operation tends to face the back 3 of his right hand upward and draw his elbows EL away from the side of his body when he pulls his hands towards the body to lift up the rotary blade.

When the distance D1 between the right grip portion 30 and the operating pipe 14 is relatively small, the inward inclination angle α of the right grip portion 30 bearing the trigger lever thereon is in the range from 15 degrees to 45 degrees or preferably from 20 degrees to 40 degrees.

Since the left grip portion 28 has the first and second grip sections 40, 42, different in angle of inclination as well as the curved transitional portion 44, the worker can grasp any of these grip sections easier to grasp in operation. The right grip portion 28, however, may be designed to incline by the same inclination angle as that of the right grip portion 30. It is recommended to determine the inclination angle β of the first left grip section 40 in the range from minus 10 degrees to 40 degrees, more preferably from 0 degrees to 30 degrees and most preferably from 10 degrees to 20 degrees. The inclination angle Y of the second left grip section 42 is recommended to be in the range from 60 degrees to 90 degrees, more preferably from 70 degrees to 90 degrees and most preferably from 80 degrees to 90 degrees.

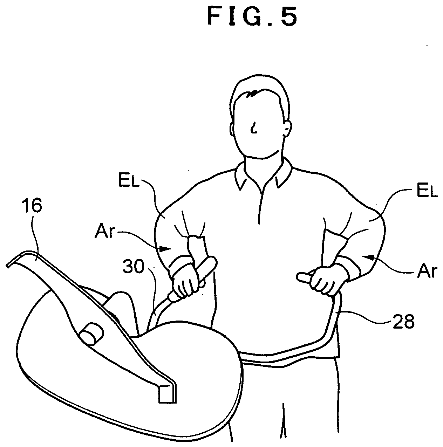

FIG. 5 is a frontal view that shows a worker having pulled the left and right grip portions 28, 30 toward his body to raise the rotary blade 16 of the brush cutter 10. The shoulder harness is omitted from this illustration. It will be apparent from FIG. 5 that the elbows EL of the worker's arms Ar have been bent at positions apart from the sides of his body.

In the embodiment of the invention, the left and right grip portions 28, 30 are formed to largely incline inward, and this contributes to shortening the distances D1, D2 of the left and right grip portions 28, 30 from the operating pipe 14. As a result, when the worker pulls his hands grasping the grip portions 28, 30 toward his body, it is ensured to guide the elbows EL of the worker's arms Ar away from the sides of his body to positions apart from the body by approximately 200 mm or more, although variable with the physical size of the worker. When the worker moves the rotary blade 16 vertically, both arms Ar of the worker exhibit the same movement as that for oaring a boat on water. On the other hand, with upright grip portions 1 (FIG. 7) of the existing machines, worker's elbows EL are bent and positioned close to the sides of his body. In other words, the arms Ar were bent and tightened to the body (FIG. 8). That is, when a worker using the existing brush cutter has pulled his hands to raise the rotary blade 16, his elbows are positioned closer to his body by a distance less than 200 mm. In FIG. 8, the shoulder harness is omitted from illustration.

In the embodiment of the invention, especially the right grip portion 30 is inclined inward by a large angle, and the back 3 of his right hand grasping this grip portion 30 faces upward. Therefore, the worker can move the rotary blade 16 either vertically or horizontally by easily moving his wrist(s) with the larger motion range of the joint(s) of the wrist(s) 4 as already explained. In addition, when he has pulled his both hands toward his body, the elbows of EL of his arms Ar are positioned apart from the sides of his body by 200 mm or more. Therefore, when he wants to move the rotary blade 16 vertically, he can move his arms Ar as if oaring a boat on water, and he can move the operating pipe 14 vertically and horizontally with these arms Ar (FIG. 5). Accordingly, the worker no more needs to bend back his body especially when lifting the rotary blade 16, and can perform the cutting work while keeping a stable posture. In this case, of course, he can easily manipulate the trigger lever and the throttle unlocking lever 34 on the right grip portion 30.

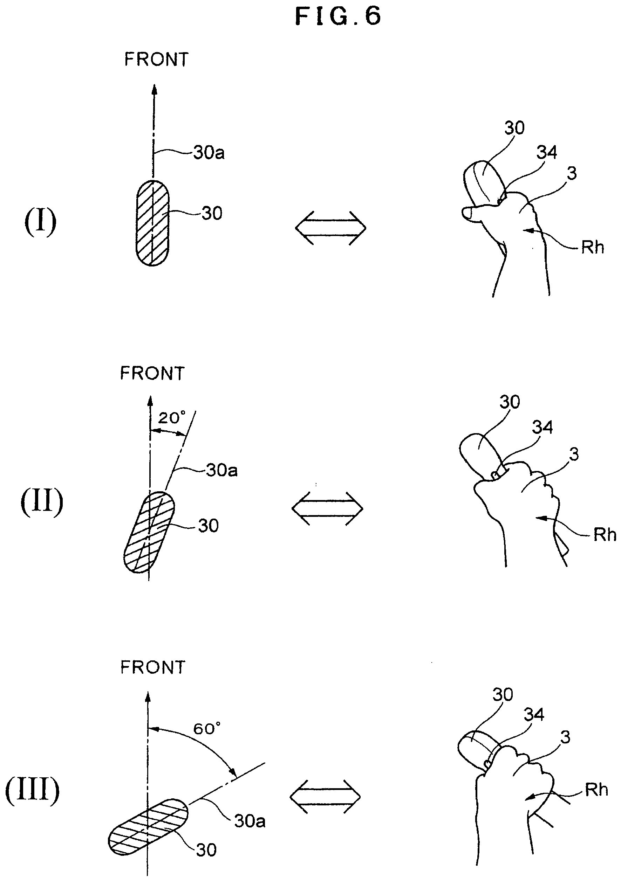

The right grip portion 30 having the trigger lever and the throttle unlocking lever 34 thereon is inclined inward and opened outward. This is explained in greater detail with reference to FIG. 6. FIG. 6 shows at (I) that a longitudinal axis 30a of a cross-section of the right grip portion 30 is parallel to the operating pipe 14 (FIG. 1). This is the essential configuration of the right grip portion 30 in existing machines, and it is an embodiment which does not belong to the invention. FIG. 6 further shows at (II) that the right grip portion 30 is mounted in an orientation with its longitudinal axis 30a being rotated outward by 20 degrees relative to the imaginary line parallel to the operating pipe 14. FIG. 6 further shows at (III) that the right grip portion 30 is mounted in an orientation with its longitudinal axis being rotated outward by 60 degrees relative to the imaginary line parallel to the operating pipe 14, in an embodiment which does not belong to the invention. The outward rotated status of the right grip portion 30 as shown in at (II) and (III) of FIG. 6 is herein called "outwardly opening configuration", and its angle is called "grip opening angle".

With reference to FIG. 6, let a comparison be made among the grip opening angles of 0 degrees in (I), 20 degrees in (II) and 60 degrees in (III). Whichever the grip opening angle is among 0 degrees, 20 degrees and 60 degrees, the back 3 of the right hand Rh is oriented upward.

A problem with 0 degrees of the grip opening angle is that the back 3 of the hand tends to face outward and the wrist tends to bend inward. Accordingly, with the grip opening angle being 0 degrees, when the worker pulls the control handle 20 toward his body (FIG. 2), his elbows EL are drawn apart from the sides of the body, but the wrists are liable to bend inward. In other words, when the grip opening angle is zero degrees, the back 3 of the hand tends to face outward, and this invites a narrower vertical motion range of the wrist. Therefore, when the worker lifts the rotary blade 16, a greater load is apt to be applied to the wrist.

On the other hand, with the grip opening angle being 60 degrees as shown at (III) of FIG. 6, the back 3 of his hand faces upward. This enables the worker to move the control handle vertically with a larger motion range for the wrist. However, since the wrist is already bent upward (toward the back 3 of the hand) before pulling the control handle 20, the worker will find it difficult to bend his wrist further upward when pulling the control handle toward his body because the upper part of the motion range of the wrist has been narrowed. In addition, when the worker pulls the control handle 20 toward his body, his elbows EL tend to move closer to the sides of the body, and this tends to restrict his further motion for raising the control handle 20.

In contrast, with the grip opening angle being 20 degrees as shown at (II) of FIG. 6, the right hand grasping the right grip portion 30 exhibits a comfortable, easy aspect. When the worker pulls the control handle 20 toward his body, he may bend the elbows alone. In this motion, the elbows EL tend to move away from the sides of the body, and the elbows tend to be guided to move away from the sides of the body without uneasy motions of the wrists. Thus, it is recommended to design at least the right grip portion 30 such that it inclines inward and rotates by the grip opening angle of 10 to 40 degrees, more preferably 15 to 35 degrees and most preferably 15 to 25 degrees.

By configuring the grip portions 28, 30 (typically the right grip portion 30) to incline inward and to open outward, in whichever vertical level the worker has to manipulate the rotary blade 16, he can always keep the backs 3 of his hands faced upward and position the elbows EL outer than the grip portions 28, 30 in the same manner as he will use his arms when oaring a boat.

### INDUSTRIAL APPLICABILITY

The present invention is applicable not only to brush cutters but also to other work machines such as blowers, vacuum cleaners and sprayers.

### LIST OF REFERENCE NUMERALS

A
- Rh: Right hand
- Ar: Arm
- EL: Elbow
- 10: Brush cutter according to an embodiment of the invention
- 12: Power source
- 14: Operating pipe
- 16: Rotary blade
- 18: Ring
- 20: Control handle
- 22: Bracket
- 24: Left handle tube
- 26: Right handle tube
- 28: Left grip portion
- 30: Right grip portion
- 34: Throttle unlocking lever
- 40: First grip portion (upright grip portion) of the left grip portion
- 42: Second grip portion of the left grip portion
- 44: Curved transitional portion of the left grip portion

## Claims

1. A work machine (10) comprising:
a control handle (20) having a right and a left grip portions (28, 30) to be grasped by worker's hands (Rh); and
an output control member provided on one of said grip portions (28, 30) of said control handle (20),
wherein said grip portion (28, 30) having said output control member thereon is inclined inward by an angle of inclination by which the back of one of the worker's hands (Rh) grasping the said grip portion (28, 30) is guided to face upward,
**characterized in that** said work machine (10) is a brush cutter, and
said grip portion (30) having said output control member thereon is opened outward by an inclination angle in the range from 10 degrees to 40 degrees, wherein said grip portion (30) having the output control member thereon is configured to induce a worker grasping said grip portion (30) to draw his elbow (El) away from a corresponding side of his body when he pulls said control handle (20) toward his body such that the worker's arm (Ar) corresponding to the hand (Hr) grasping the grip portion (30) having the output control member thereon exhibits a motion similar to that for oaring a boat on water.

2. The work machine (10) according to claim 1, wherein the angle of inclination of said grip portion (30) having the output control member thereon is in the range from 25 degrees to 75 degrees with respect to a vertical line (VI).

3. The work machine (10) according to claim 1, wherein the angle of inclination of said grip portion (30) having the output control member thereon is in the range from 15 degrees to 45 degrees with respect to a vertical line (VI).

4. The work machine (10) according to one of the claims 1 through 3, wherein said brush cutter comprises a power source (12); a rotary shaft rotated by said power source (12) to transmit a rotational force to a cutting blade; an operating pipe (14) made of metal to enclose said rotary shaft; and a rotary blade (16) as said cutting blade provided at a distal end of said operating pipe (14),
wherein said rotary blade (16) is connected to said power source (12) via said rotary shaft, and
wherein said control handle (20) is removably attached to said operating pipe (14).

5. The work machine (10) according to claim 4 wherein said power source (12) is an internal combustion engine.

6. The control handle (20) of the work machine (10) according to one of claims 1 through 5, wherein said control handle (20) is to be mounted on said work machine (10).

## Patentansprüche

1. Arbeitsmaschine (10), umfassend:
einen Steuerungshandgriff (20) mit einem rechten und einem linken Griffteil (28, 30), die von Händen (Rh) eines Arbeiters zu greifen sind; und
ein Abgabeleistungssteuerelement, das an einem der Griffteile (28, 30) des Steuerungshandgriffs (20) vorgesehen ist,
wobei der Griffteil (28, 30), an dem das Abgabeleistungssteuerelement vorgesehen ist, unter einem Neigungswinkel nach innen geneigt ist, durch den die Rückseite einer der Hände (Rh) des Arbeiters, die den Griffteil (28, 30) greift, so geführt ist, dass sie aufwärts gewandt ist,
**dadurch gekennzeichnet, dass** die Arbeitsmaschine (10) ein Gestrüppschneidegerät ist, und
der Griffteil (30), an dem das Abgabeleistungssteuerelement vorgesehen ist, um einen Neigungswinkel im Bereich von 10 Grad bis 40 Grad nach außen geöffnet ist,
wobei der Griffteil (30), an dem das Abgabeleistungssteuerelement vorgesehen ist, so ausgebildet ist, dass es einen den Griffteil (30) greifenden Arbeiter veranlasst, seinen Ellbogen (El) von einer entsprechenden Seite seines Körpers weg zu ziehen, wenn er den Steuerungshandgriff (20) zu seinem Körper hin zieht, so dass der Arm (Ar) des Arbeiters, der zu der Hand (Hr) gehört, die den Griffteil (30), an dem das Abgabeleistungssteuerelement vorgesehen ist, greift, eine Bewegung ausführt, die ähnlich derjenigen zum Rudern eines Boots auf dem Wasser ist.

2. Arbeitsmaschine (10) nach Anspruch 1, wobei der Neigungswinkel des Griffteils (30) an dem das Abgabeleistungssteuerelement vorgesehen ist, im Bereich von 25 Grad bis 75 Grad bezüglich einer vertikalen Linie (VI) liegt.

3. Arbeitsmaschine (10) nach Anspruch 1, wobei der Neigungswinkel des Griffteils (30), an dem das Abgabeleistungssteuerelement vorgesehen ist, im Bereich von 15 Grad bis 45 Grad bezüglich einer vertikalen Linie (VI) ist.

4. Arbeitsmaschine (10) nach einem der Ansprüche 1 bis 3, wobei das Gestrüppschneidegerät eine Leistungsquelle (12); eine Drehwelle, die von der Leistungsquelle (12) zum Übertragen einer Drehkraft auf eine Schneidklinge gedreht wird; ein Bedienrohr (14) aus Metall zum Umschließen der Drehwelle; und eine Drehklinge (60) als Schneidklinge umfasst, die an einem distalen Ende des Bedienrohr (14) vorgesehen ist,
wobei die Drehklinge (16) mit der Leistungsquelle (12) über die Drehwelle verbunden ist, und
wobei der Steuerungshandgriff (20) entfernbar an dem Bedienrohr (14) angebracht ist.

5. Arbeitsmaschine (10) nach Anspruch 4, wobei die Leistungsquelle (12) ein Verbrennungsmotor ist.

6. Steuerungshandgriff (20) der Arbeitsmaschine (10) nach einem der Ansprüche 1 bis 5,
wobei der Steuerungshandgriff (20) an der Arbeitsmaschine (10) zu montieren ist.

## Revendications

1. Machine-outil (10) comprenant :
une poignée de commande (20) présentant des parties de prise droite et gauche (28, 30) destinées à être saisies par les mains (Rh) d'un utilisateur ; un organe de commande de sortie positionné sur l'une desdites parties de prise (28, 30) de ladite poignée de commande (20),
dans laquelle ladite partie de prise (28, 30) présentant ledit organe de commande de sortie est inclinée vers l'intérieur suivant un angle d'inclinaison grâce auquel le dos de l'une des mains de l'utilisateur (Rh) qui a saisi ladite partie de prise (28, 30) est guidée pour être tournée vers le haut,
**caractérisée en ce que** ladite machine outil (10) est une débroussailleuse, et ladite partie de prise (30) présentant ledit organe de commande de sortie est ouverte vers l'extérieur suivant un angle d'inclinaison qui est compris entre 10 degrés et 40 degrés,
dans laquelle ladite partie de prise (30) présentant ledit organe de commande de sortie est configurée de manière à obliger un utilisateur qui a saisi ladite partie de prise (30) à tirer sur son coude (El) pour l'éloigner d'un côté correspondant de son corps lorsqu'il tire ladite poignée de commande (20) vers son corps, de telle sorte que le bras de l'utilisateur (Ar) correspondant à la main (Hr) qui a saisi la partie de prise (30) présentant l'organe de commande de sortie réalise un mouvement similaire à celui de l'utilisation d'une rame d'un bateau sur l'eau.

2. Machine-outil (10) selon la revendication 1,
dans laquelle l'angle d'inclinaison de ladite partie de prise (30) présentant l'organe de commande de la sortie est compris entre 25 degrés et 75 degrés par rapport à une ligne verticale (VI).

3. Machine-outil (10) selon la revendication 1,
dans laquelle l'angle d'inclinaison de la partie de prise (30) présentant l'organe de commande de sortie est compris entre 15 degrés et 45 degrés par rapport à une ligne verticale (VI).

4. Machine-outil (10) selon l'une des revendications 1 à 3, dans laquelle ladite débroussailleuse comprend une source d'énergie (12) ; un arbre rotatif mis en rotation par ladite source d'énergie (12) pour transmettre une force de rotation à une lame de coupe ; un tube de manoeuvre (14) composé de métal pour entourer ledit arbre rotatif ; et une lame rotative (16) faisant office de lame de coupe fournie à une extrémité distale dudit tube de manoeuvre (14),
dans laquelle ladite lame rotative (16) est reliée à ladite source d'énergie (12) via ledit arbre rotatif, et
dans laquelle ladite poignée de commande (20) est fixée de manière amovible sur ledit tube de manoeuvre (14).

5. Machine-outil selon la revendication 4, dans laquelle ladite source d'énergie (12) est un moteur à combustion interne.

6. Poignée de commande (20) de la machine-outil (10) selon l'une des revendications 1 à 5, dans laquelle ladite poignée de commande (20) doit être montée sur ladite machine-outil (10).
